(19) **Europäisches Patentamt**
**European Patent Office**
**Office européen des brevets**

(11) **EP 1 609 001 B1**

(12) **FASCICULE DE BREVET EUROPEEN**

(45) Date de publication et mention
de la délivrance du brevet:
**19.09.2012 Bulletin 2012/38**

(51) Int Cl.:
***G01S 15/10*** *(2006.01)*      ***G01S 15/52*** *(2006.01)*
***G01S 15/58*** *(2006.01)*      ***G01S 15/89*** *(2006.01)*

(21) Numéro de dépôt: **04741438.8**

(22) Date de dépôt: **24.03.2004**

(86) Numéro de dépôt international:
**PCT/EP2004/050354**

(87) Numéro de publication internationale:
**WO 2004/088355 (14.10.2004 Gazette 2004/42)**

(54) **PROCEDE DE TRAITEMENT DE SIGNAUX, ET SONAR ACTIF LE METTANT EN OEUVRE**

SIGNALVERARBEITUNGSVERFAHREN UND DIESES IMPLEMENTIERENDER AKTIVSONAR

SIGNAL-PROCESSING METHOD AND ACTIVE SONAR IMPLEMENTING SAME

(84) Etats contractants désignés:
**AT BE BG CH CY CZ DE DK EE ES FI FR GB GR HU IE IT LI LU MC NL PL PT RO SE SI SK TR**

(30) Priorité: **01.04.2003 FR 0304042**

(43) Date de publication de la demande:
**28.12.2005 Bulletin 2005/52**

(73) Titulaire: **Thales**
**92200 Neuilly Sur Seine (FR)**

(72) Inventeurs:
• **ALINAT, Pierre,**
**THALES INTELLECTUAL PROPERTY**
**F-94117 ARCUEIL (FR)**
• **BIENVENU, Georges,**
**THALES INTELLECTUAL PROPERTY**
**F-94117 ARCUEIL (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 898 176      FR-A- 2 769 372**
**US-A- 2 431 854      US-A- 4 562 438**
**US-A- 5 212 490**

• **CARMILLET V ET AL: "Low-speed targets sonar detection using autoregressive models in reverberation;experimental performances for wideband signals" 28 septembre 1998 (1998-09-28), OCEANS '98 CONFERENCE PROCEEDINGS NICE, FRANCE 28 SEPT.-1 OCT. 1998, NEW YORK, NY, USA,IEEE, US, PAGE(S) 1285-1289 , XP010311934 ISBN: 0-7803-5045-6 colonne 6, ligne 10-30**
• **CARMILLET VALÉRIE: "Contribution à la détection en présence de réverbération. Applications en acoustique sous-marine" 1998, , GRENOBLE , XP002265034 alinéas [03.3], [04.3], [04.4]**

## Description

L'invention concerne le domaine de l'acoustique sous marine et plus particulièrement le domaine du traitement du signal dans un système sonar actif basse fréquence (BF).

Ce type de système est généralement remorqué à partir d'un bâtiment de surface et comporte un poisson équipé d'un émetteur BF lequel remorque une antenne de réception linéaire munie de capteurs acoustiques ou hydrophones. Un tel poisson et un tel émetteur sont par exemple décrits respectivement dans les brevets français publiées sous les nos 2735645 et 2776161. Toutefois l'invention peut s'appliquer à tous types de sonars actifs. Il est bien connu qu'un sonar actif émet des impulsions acoustiques récurrentes et que les échos reçus en retour sont traités pour détecter et classifier les cibles éventuelles.

Lorsqu'un sonar actif opère dans une zone telle que le fond se trouve insonifié, la réverbération qui provient du fond pour l'essentiel limite fortement l'utilité opérationnelle du sonar à cause du trop grand nombre de fausses alarmes qui apparaît. Ceci est particulièrement vrai pour les petits fonds.

Pour diminuer la gêne en milieu réverbérant, il est connu d'utiliser des codes d'émission mettant à profit les larges bandes de fréquence, typiquement un octave, des transducteurs actuels. Ces codes possèdent une bonne résolution en distance, d'où le grand nombre d'alarmes qui sont produites.

Il est connu d'émettre à chaque récurrence, soit un code HFM (Hyperbolic Frequency Modulation, c'est-à-dire modulation de fréquence hyperbolique en français), soit un code BPSK (Binary Pulse Shift Keing, c'est-à-dire modulation de phase à deux états), soit un code FP (Frequency pulse, c'est-à-dire Impulsion de fréquence).

Le code HFM est tolérant au doppler : il ne permet donc pas la mesure du doppler induit par une cible en mouvement mais, en revanche, le filtrage adapté en réception ne nécessite qu'une seule copie.

Le code BPSK est intolérant au doppler et est utilisé pour mesurer le doppler ; il permet les mêmes performances en détection que le code HFM mais le filtrage adapté en réception nécessite un nombre de copies important pour réaliser le filtrage adapté en réception, typiquement un nombre supérieur à 200, et donc un coût de traitement multiplié d'autant.

Quand au code FP, il est utilisé pour mesurer le doppler propre de l'émetteur.

La présente invention permet de diminuer le taux de fausses alarmes tout en conservant la classification des objets.

L'objet de l'invention est donc un procédé de traitement de signaux reçus correspondant à un signal émis comportant deux impulsions par récurrence, une première impulsion large bande tolérante au doppler et une deuxième impulsion large bande non tolérante au doppler, ledit procédé comportant :

- une étape de détection d'objets effectuée sur la partie du signal reçu provenant de la première impulsion émise à chaque récurrence et fournissant une alarme pour chaque objet détecté,
- une étape de filtrage adapté du signal reçu provenant de la deuxième impulsion émise à chaque récurrence, étape réalisant la corrélation de ce signal avec plusieurs copies dopplérisées couvrant une plage de vitesses donnée,
- une étape de classification des objets détectés est réalisée à partir des signaux résultant de la mise en oeuvre de l'étape de filtrage adapté sur la partie du signal reçu provenant de la deuxième impulsion émise à chaque récurrence qui correspond à chaque objet détecté satisfaisant au moins un critère de sélection prédéterminé.

A chaque récurrence, les deux codes HFM et BPSK sont émis. La détection des alarmes est faite avec le code HFM et l'estimation du doppler est faite avec le code BPSK sur les alarmes qui dépassent un certain seuil, ceci pour éliminer les échos de fond. Autrement dit :

- Détection avec le code HFM
- Classification doppler avec le code BPSK

De plus, les échos de fond étant identifiés, la mesure du doppler propre de l'émetteur est faite par analyse des échos de fond produits par le code BPSK.

Les caractéristiques et avantages de l'invention apparaîtront plus clairement à la lecture de la description, faite à titre d'exemple, et des figures s'y rapportant qui représentent :

- Figure 1, les étapes successives du procédé selon l'invention,
- Figure 2, les distributions probabilistiques du doppler mesuré $d_m$ pour deux hypothèses : $H_0$ pour écho de fond (immobiles) et $H_1$ pour écho vrai de doppler supposé $d_i$.

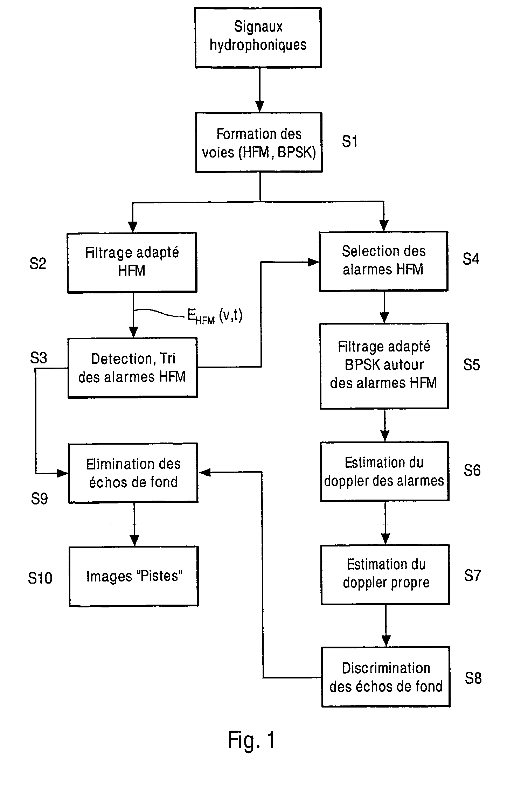

La figure 1 représente les étapes successives du procédé selon l'invention.

De manière connue, les signaux hydrophoniques subissent un traitement amont (démodulation, filtrage, amplification...) puis sont numérisés. Dans le cas d'un sonar actif, ces signaux contiennent les signaux émis après propagation dans l'eau par le trajet direct et les trajets réfléchis auxquels viennent s'ajouter les signaux réverbérés. En particulier, parmi les signaux réfléchis, les échos provenant du fond marin constituent une source de fausses alarmes importante, notamment par petits fonds.

Selon l'invention, à chaque récurrence sont émises deux impulsions codées HFM et BPSK dont les caractéristiques permettent de les séparer à la réception.

Ils peuvent être émis à des instants différents avec des bandes de fréquences se recouvrant en totalité ou en partie, ou bien être émis simultanément dans des bandes de fréquences distinctes, ou les deux à la fois.

En se reportant à la figure 1, le traitement des signaux hydrophoniques consiste en premier lieu à former des voies S1 de manière connue, ce traitement étant indépendant du code émis.

Sur les signaux de voies HFM, est appliqué le traitement de filtrage adapté S2 consistant à corréler le signal reçu avec une copie du signal émis qui après détection quadratique fournit des signaux représentatifs de l'énergie en fonction de la voie (v) et du temps (t), soit $E_{HFM}(v,t)$.

L'étape suivante S3 consiste à détecter et à trier les alarmes sur critère énergétique. De manière classique, sont d'abord recherchés les maxima locaux par comparaison avec un seuil prédéterminé. Ensuite, est effectuée une normalisation en calculant pour chaque maximum local une valeur égale à $(E_{HFM} - M)/\sigma$ où M est la moyenne du bruit de référence prise dans le voisinage de l'espace « voies-temps » (v,t) et $\sigma$ l'écart type correspondant. Puis, sont éliminés les maxima éventuels autour de chaque maximum s'ils sont d'énergie normée inférieure. Enfin, la détection proprement dite est obtenue en comparant à un seuil d'énergie normée les maxima non éliminés.

Selon l'invention, le traitement de filtrage adapté S5 sur les signaux de voies « BPSK » n'est effectuée que sur les alarmes issues du traitement des impulsions HFM S4. Le traitement de filtrage adapté correspondant au code BPSK qui est intolérant au doppler nécessite de corréler le signal de voie avec plusieurs copies dopplerisées couvrant une plage de vitesses de cible données. Ainsi pour une alarme, sont obtenus autant de signaux qu'il y a de copies et forment les canaux doppler.

L'étape suivante S6 consiste à estimer le doppler d et l'écart type associé $\sigma_{di}$ de l'alarme « i » à partir des signaux issus des canaux doppler. Si $d_{canal}$ est le doppler donné par le canal dans lequel se trouve l'alarme, le doppler d est obtenu par interpolation avec les dopplers des canaux adjacents.

L'étape suivante S7 consiste à estimer le doppler propre $d_p$ dû à la vitesse des antennes, émission et réception, par rapport au fond. Il est estimé à chaque instant, soit à partir d'un doppler des échos provenant du fond détectés par le code BPSK, soit à partir du spectre de la réverbération obtenu par un code FP émis avec les codes HFM et BPSK. Est également estimé l'écart type $\sigma_d$.

L'étape suivante S8 consiste à décider si cette alarme correspond à un écho de fond ou bien à un écho vrai à vitesse radiale non nulle. On dispose des valeurs du doppler di et du doppler propre dp ainsi que les écarts quadratiques correspondants $\sigma_{di}$ et $\sigma_{dp}$.

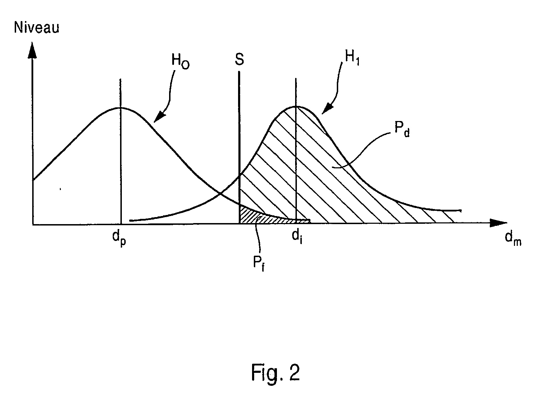

Sur la figure 2 sont représentées les distributions probabilistiques du doppler mesuré $d_m$ pour deux

hypothèses : $H_0$ pour écho de fond (immobiles) et $H_1$ pour écho vrai de doppler supposé $d_i$. $H_0$ est centrée sur $d_p$ avec un écart quadratique $(\sigma_{d_p}^2 + \sigma_{d_i}^2)^{1/2}$ et $H_1$ est centrée sur $d_i$ avec un écart quadratique $\sigma_{di}$.

Pour décider, $d_i-d_p$ est calculé et un seuil S est choisi : si $d_i-d_p > S$, il y a écho vrai. La valeur de S est obtenue à partir des valeur de $P_f$ qui est la probabilité de décider à tort qu'un écho de fond est vrai.

Le processus de discrimination entre écho vrai à vitesse radiale non nulle et écho de fond pour chaque alarme détecté en HFM est réitéré. Puis, parmi les alarmes HFM détectées et triées, on procède à l'élimination S9 des alarmes qui correspondent aux échos de fond (ou au échos vrais à vitesse radiale nulle).

A l'étape S10 est obtenue une image des pistes (suites des alarmes en fonction du temps et de la direction) débarrassée des fausses alarmes et notamment les échos de fond et ce d'autant mieux qu'ils sont forts et donc gênants.

## Revendications

**1.** Procédé de traitement de signaux reçus correspondant à un signal émis comportant deux impulsions par récurrence, une première impulsion large bande tolérante au doppler et une deuxième impulsion large bande non tolérante au doppler, ledit procédé comportant :

- une étape (S3) de détection d'objets effectuée sur le signal reçu provenant de la première impulsion émise à chaque récurrence et fournissant une alarme pour chaque objet détecté,
- une étape (S5) de filtrage adapté du signal reçu provenant de la deuxième impulsion émise à chaque récurrence, étape réalisant la corrélation de ce signal avec plusieurs copies dopplérisées couvrant une plage de vitesses donnée,
- une étape (S8) de classification de ces objets détectés,

**caractérisé en ce que** l'étape (S8) de classification des objets détectés est réalisée à partir des signaux résultant de la mise en oeuvre de l'étape (S5) de filtrage adapté sur la partie du signal reçu provenant de la deuxième impulsion émise à chaque récurrence qui correspond à chaque objet détecté satisfaisant au moins un critère de sélection prédéterminé (S3, S4).

**2.** Procédé de traitement de signaux selon la revendication précédente **caractérisé en ce que** la sélection (S3) appliqué aux alarmes comporte une comparaison des alarmes avec un seuil prédéterminé.

**3.** Procédé de traitement de signaux selon l'une quelconque des revendications précédentes **caractérisé en ce que** l'étape (S3) de détection d'objets est précédée par une étape (S2) réalisant le filtrage adapté de la partie du signal reçu provenant de la première impulsion émise à chaque récurrence et fournissant une énergie $E_{HFM}(v,t)$.

4. Procédé de traitement de signaux selon la revendication 3, **caractérisé en ce que** l'étape (S2) de filtrage adapté réalise :

> - la corrélation de la partie du signal reçu provenant de la première impulsion émise à chaque récurrence avec une copie de l'impulsion émise,
> - la détection quadratique du signal obtenu par corrélation et l'obtention de signaux représentant l'énergie du signal en fonction de la voie et du temps $E_{HFM}(v,t)$.

5. Procédé de traitement de signaux selon l'une des revendications 3 ou 4, **caractérisé en ce que** l'étape de détection (S3) des objets réalise :

> - la recherche des maxima locaux d'énergie $E_{HFM}(v,t)$ par comparaison avec un seuil d'énergie prédéterminé $E_s$,
> - la normalisation des maxima obtenus par calcul pour chaque maximum local de la valeur $(E_{HFM} - M)/\sigma$, M étant la moyenne du bruit de référence et $\sigma$ l'écart type correspondant,
> - l'élimination des éventuels maxima situés autour de chaque maximum et dont l'énergie normée est inférieure à celle du maximum considéré,
> - la détection proprement dite des objets, obtenue en comparant à un seuil d'énergie normée prédéterminé, $E_{SN}$, l'énergie normée des maxima non éliminés.

6. Procédé de traitement de signaux selon l'une quelconque des revendications précédentes **caractérisé en ce qu'**il comporte une étape (S6) d'estimation du doppler $d_i$ et/ou des écarts types associés $\sigma_{di}$ de chaque alarme i satisfaisant au moins un critère prédéterminé (S3, S4), à partir des signaux fournis par l'étape (S5) de filtrage adapté du signal reçu provenant de la deuxième impulsion émise à chaque récurrence

7. Procédé de traitement de signaux selon l'une quelconque des revendications précédentes **caractérisé en ce qu'**il comporte une étape (S7) d'estimation du doppler propre.

8. Procédé de traitement de signaux selon la revendication 7, **caractérisé en ce que** l'estimation du doppler propre (S7) est réalisée à chaque instant à partir d'un doppler de la partie du signal reçu provenant de la deuxième impulsion émise à chaque récurrence.

9. Procédé de traitement de signaux selon la revendication 7, **caractérisé en ce que** l'estimation du doppler propre (S7) est réalisée à chaque instant à partir du spectre de la réverbération de la partie du signal reçu correspondant aux impulsions FP, venant de l'expression anglaise frequency pulse, c'est-à-dire impulsion de fréquence, lorsque le signal émis comporte des impulsions FP.

10. Procédé de traitement de signaux selon l'une quelconque des revendications précédentes **caractérisé en ce qu'**il comporte :

> - Une étape de formation (S1) d'une première voie comportant la partie du signal reçu correspondant à la première impulsion émise à chaque récurrence, et d'une deuxième voie comportant la partie du signal reçu correspondant à la deuxième impulsion émise à chaque récurrence,
> - Une étape de filtrage adapté (S2) de la première voie,
> - Une étape de détection des objets (S3) fournissant une alarme pour chaque objet détecté,
> - Une étape de sélection des alarmes satisfaisant au moins le critère prédéterminé (S3, S4),
> - Une étape (S5) de filtrage adapté de la deuxième voie autour des alarmes sélectionnées,
> - Une étape (S6) d'estimation, sur la deuxième voie, du doppler des alarmes sélectionnées,
> - Une étape (S7) d'estimation du doppler propre ,
> - Une étape (S8) de classification des objets par discrimination entre les échos de fond et les échos vrais à partir des valeurs du doppler des alarmes sélectionnées et du doppler propre ,
> - Une étape (S9) d'élimination, sur la première voie, des alarmes détectées correspondant à des échos de fond.

11. Procédé de traitement selon l'une quelconque des revendications précédentes **caractérisé en ce que** la première impulsion émis à chaque récurrence est de type HFM, tandis que la deuxième impulsion émise à chaque récurrence est de type BPSK.

12. Sonar actif comportant des moyens d'émission d'un signal comportant par récurrence deux impulsions, une première impulsion large bande tolérante au doppler et une deuxième impulsion large bande non tolérante au doppler, **caractérisé en ce qu'**il comporte en outre des moyens de réception du signal émis aptes à mettre en oeuvre le procédé de traitement de signaux selon l'une quelconque des revendications 1 à 11.

**13.** Sonar actif selon la revendication 12, **caractérisé en ce que** les moyens d'émission émettent les deux impulsion à des instants différents avec des bandes de fréquence se recouvrant en totalité ou en partie.

**14.** Sonar actif selon la revendication 12, **caractérisé en ce que** les moyens d'émission émettent les deux impulsions simultanément avec des bandes de fréquence distinctes.


**Claims**

**1.** A method for processing signals corresponding to an emitted signal, including two pulses by recurrence, a first Doppler-tolerant wideband pulse and a second non-Doppler-tolerant wideband pulse, said method including:

    - a step (S3) for detecting objects, carried out on the signal received from the first pulse emitted at each recurrence and providing an alarm for each detected object,
    - a step (S5) for adaptive filtering of the signal received from the second pulse emitted at each recurrence, a step producing the correlation of this signal with several dopplerized copies covering a given range of velocities,
    - a step (S8) for classifying these detected objects,

    **characterized in that** the step (S8) for classifying detected objects is achieved from signals resulting from the application of the adaptive filtering step (S5) on the portion of the signal received from the second pulse emitted at each recurrence which corresponds to each detected object meeting at least one predetermined selection criterion (S3, S4).

**2.** The signal processing method according to the preceding claim, **characterized in that** the selection (S3) applied to the alarms includes a comparison of the alarms with a predetermined threshold.

**3.** The signal processing method according to any of the preceding claims, **characterized in that** the object detection step (S3) is preceded with a step (S2) achieving adaptive filtering of the portion of the signal received from the first pulse emitted at each recurrence and providing an energy $E_{HFM}(v, t)$.

**4.** The signal processing method according to claim 3, **characterized in that** the adaptive filtering step (S2) produces:

    - the correlation of the portion of the signal received from the first pulse emitted at each recurrence with a copy of the emitted pulse,
    - the quadratic detection of the signal obtained by correlation and the obtaining of signals representing the energy of the signal as a function of the channel and of time $E_{HFM}(v, t)$.

**5.** The signal processing method according to one of claims 3 or 4, **characterized in that** the object detection step (S3) achieves:

    - searching for local energy $E_{HFM}(v, t)$ maxima by comparison with a predetermined energy threshold $E_s$,
    - normalizing the obtained maxima by calculating, for each local maximum, the value $(E_{HFM} - M)/\sigma$, M being the average of the reference noise and $\sigma$ the corresponding standard deviation,
    - removing the possible maxima located around each maximum and for which the normalized energy is less than that of the relevant maximum,
    - actually detecting the objects, obtained by comparing the normalized energy of the non-removed maxima with a predetermined normalized energy threshold $E_{SN}$.

**6.** The signal processing method according to any of the preceding claims, **characterized in that** it includes a step (S6) for estimating the Doppler $d_i$ and/or the associated standard deviations $\sigma_{di}$ of each alarm i meeting at least one predetermined criterion (S3, S4), from signals provided by the step (S5) for adaptive filtering of the signal received from the second pulse emitted at each recurrence.

**7.** The signal processing method according to any of the preceding claims, **characterized in that** it includes a step (S7) for estimating the specific Doppler.

**8.** The signal processing method according to claim 7, **characterized in that** estimation of the specific Doppler (S7) is carried out at each instant from a Doppler of the portion of the signal received from the second pulse emitted at each recurrence.

**9.** The signal processing method according to claim 7, **characterized in that** the estimation of the specific Doppler (S7) is carried out at each instant from the reverberation spectrum of the portion of the received signal corresponding to the FP (frequency pulse) pulses when the emitted signal includes FP pulses.

**10.** The signal processing method according to any of the preceding claims, **characterized in that** it includes:

    - a step (S1) for forming a first channel including the portion of the received signal corresponding to the first pulse emitted at each recurrence, and a second channel including the portion of the received signal corresponding to the second pulse emitted at each recurrence,

- a step for adaptive filtering (S2) of the first channel,
- an object detection step (S3) providing an alarm for each detected object,
- a step for selecting alarms meeting at least the predetermined criterion (S3, S4),
- a step (S5) for adaptive filtering of the second channel around selected alarms,
- a step (S6) for estimating on the second channel the Doppler of the selected alarms,
- a step (S7) for estimating the specific Doppler,
- a step (S8) for classifying the objects by discriminating between the background echoes and the real echoes from values of the Doppler of the selected alarms and of the specific Doppler,
- a step (S9) for removing on the first channel the detected alarms corresponding to background echoes.

11. The processing method according to any of the preceding claims, **characterized in that** the first pulse emitted at each recurrence is of the HFM type, while the second pulse emitted at each recurrence is of the BPSK type.

12. An active sonar, including means for emitting a signal including by recurrence two pulses, a first Doppler-tolerant wideband pulse and a second non-Doppler tolerant wideband pulse,
**characterized in that** it further includes means for receiving the emitted signal, capable of applying the signal processing method according to any of claims 1 to 11.

13. The active sonar according to claim 12, **characterized in that** the emission means emit both pulses at different instants with totally or partly overlapping frequency bands.

14. The active sonar according to claim 12, **characterized in that** the emission means emit both pulses simultaneously with distinct frequency bands.

**Patentansprüche**

1. Verfahren zur Bearbeitung von empfangenen Signalen, die einem gesendeten Signal entsprechen, das zwei Impulse durch Wiederholung aufweist, einen ersten dopplertoleranten Breitbandimpuls und einen zweiten nicht dopplertoleranten Breitbandimpuls, wobei das Verfahren aufweist:

- einen Objekt-Erkennungsschritt (S3), der auf dem empfangenen Signal durchgeführt wird, das vom ersten, bei jeder Wiederholung gesendeten Impuls herrührt und für jedes erkannte Objekt eine Alarmmeldung liefert,
- einen Filterschritt (S5), der an das empfangene Signal angepasst ist, das vom zweiten, bei jeder Wiederholung gesendeten Impuls herrührt, wobei der Schritt die Korrelation dieses Signals mit mehreren gedopplerten Kopien realisiert, die einen bestimmten Geschwindigkeitsbereich abdecken,
- einen Klassifizierungsschritt (S8) dieser erkannten Objekte,

**dadurch gekennzeichnet, dass** der Klassifizierungsschritt (S8) der erkannten Objekte ausgehend von Signalen durchgeführt wird, die aus der Umsetzung vom Schritt (S5) der Filterung resultieren, die an den Abschnitt des empfangenen Signals angepasst ist, der vom zweiten, bei jeder Wiederholung gesendeten Impuls herrührt, die jedem erkannten Objekt entspricht, das mindestens ein vorbestimmtes Auswahlkriterium (S3, S4) erfüllt.

2. Verfahren zur Signalverarbeitung nach vorangehendem Anspruch, **dadurch gekennzeichnet, dass** die auf die Alarmmeldungen angewendete Auswahl (S3) einen Vergleich der Alarmmeldungen mit einer vorbestimmten Schwelle aufweist.

3. Verfahren zur Signalverarbeitung nach vorangehendem Ansprüche, **dadurch gekennzeichnet, dass** dem Objekt-Erkennungsschritt (S3) ein Schritt (S2) vorausgeht, der die angepasste Filterung des Abschnitts des empfangenen Signals durchführt, der vom ersten, bei jeder Wiederholung gesendeten Impuls herrührt und eine Energie $E_{HFM}(v, t)$ liefert.

4. Verfahren zur Signalverarbeitung nach Anspruch 3, **dadurch gekennzeichnet, dass** der Schritt (S2) der angepassten Filterung durchführt:

- die Korrelation des Abschnitts des empfangenen Signals, der vom ersten, bei jeder Wiederholung gesendeten Impuls herrührt mit einer Kopie des gesendeten Impulses,
- die quadratische Erkennung des erhaltenen Signals durch Korrelation und den Erhalt von Signalen, die die Energie des Signals in Abhängigkeit vom Weg und von der Zeit $E_{HFM}(v, t)$ repräsentieren.

5. Verfahren zur Signalverarbeitung nach einem der Ansprüche 3 oder 4, **dadurch gekennzeichnet, dass** der Objekt-Erkennungsschritt (S3) durchführt:

- die Suche der lokalen Energiemaxima $E_{HFM}(v,$

t) durch Vergleich mit einer vorbestimmten Energiestufe $E_S$,

- die Normalisierung der erhaltenen Maxima durch Berechnung des Werts $(E_{HFM} - M)/\sigma$ für jedes lokale Maximum, wobei M der Mittelwert des Referenzgeräuschs und $\sigma$ die entsprechende Typenabweichung ist,

- die Beseitigung eventueller Maxima, die sich um jedes Maximum befinden und deren genormte Energie kleiner ist als die des betreffenden Maximums,

- die eigentliche Objekterkennung, die durch Vergleich der genormten Energie der nicht beseitigten Maxima mit einer vorbestimmten Energieschwelle $E_{SN}$ erzielt wird.

**6.** Verfahren zur Signalverarbeitung nach einem der vorangehenden Ansprüche, **dadurch gekennzeichnet, dass** es einen Abschätzungsschritt (S6) des Dopplers $d_i$ und/oder der verbundenen Typenabweichungen $\sigma_{di}$ jeder Alarmmeldung i aufweist, die mindestens einem vorbestimmten Kriterium (S3, S4) entspricht, ausgehend von Signalen, die vom Schritt (S5) der angepassten Filterung des empfangenen Signals geliefert werden, das vom zweiten Impuls herrührt, der bei jeder Wiederholung gesendet wird.

**7.** Verfahren zur Signalverarbeitung nach vorangehendem Anspruch, **dadurch gekennzeichnet, dass** es einen Abschätzungsschritt (S7) des eigenen Dopplers aufweist.

**8.** Verfahren zur Signalverarbeitung nach Anspruch 7, **dadurch gekennzeichnet, dass** die Abschätzung des eigenen Dopplers (S7) zu jeder Zeit ausgehend von einem Doppler des Abschnitts des empfangenen Signals durchgeführt wird, der vom zweiten Impuls herrührt, der bei jeder Wiederholung gesendet wird.

**9.** Verfahren zur Signalverarbeitung nach Anspruch 7, **dadurch gekennzeichnet, dass** die Abschätzung des eigenen Dopplers (S7) zu jeder Zeit ausgehend vom Spektrum des Reflexes des Abschnitts des empfangenen Signals durchgeführt wird, der den FP-Impulsen, abgeleitet vom englischen Ausdruck frequencypulse, was Frequenzimpuls bedeutet, entspricht, wenn das gesendete Signal FP-Impulse aufweist.

**10.** Verfahren zur Signalverarbeitung nach einem der vorangehenden Ansprüche, **dadurch gekennzeichnet, dass** es aufweist:

- einen Ausbildungsschritt (S1) eines ersten Wegs, der den Abschnitt des empfangenen Signals aufweist, der dem ersten Impuls entspricht, der bei jeder Wiederholung gesendet wird, und eines zweiten Wegs, der den Abschnitt des empfangenen Signals aufweist, der dem zweiten Impuls entspricht, der bei jeder Wiederholung gesendet wird,

- einen Filterschritt (S2), der an den ersten Weg angepasst ist,

- einen Objekt-Erkennungsschritt (S3), der für jedes erkannte Objekt eine Alarmmeldung ausgibt,

- einen Auswahlschritt der Alarmmeldungen, die mindestens das vorbestimmte Kriterium (S3, S4) erfüllen,

- einen Schritt (S5) der Filterung, der an den zweiten Weg um die ausgewählten Alarmmeldungen angepasst ist,

- einen Abschätzungsschritt (S6) auf dem zweiten Weg des Dopplers der ausgewählten Alarmmeldungen,

- einen Abschätzungsschritt (S7) des eigenen Dopplers,

- einen Objekt-Klassifizierungsschritt (S8) durch Unterscheidung zwischen Bodenechos und echten Echos ausgehend von den Dopplerwerten der ausgewählten Alarmmeldungen und des eigenen Dopplers,

- einen Beseitigungsschritt (S9) auf dem ersten Weg der ausgegebenen Alarmmeldungen, die Bodenechos entsprechen.

**11.** Verarbeitungsverfahren nach einem der vorangehenden Ansprüche, **dadurch gekennzeichnet, dass** der erste Impuls, der bei jeder Wiederholung gesendet wird, vom Typ HFM ist, wogegen der zweite Impuls, der bei jeder Wiederholung gesendet wird, vom Typ BPSK ist.

**12.** Aktives Sonar, das Sendemittel eines Signals aufweist, das durch Wiederholung zwei Impulse aufweist, einen ersten dopplertoleranten Breitbandimpuls und einen zweiten nicht dopplertoleranten Breitbandimpuls,
**dadurch gekennzeichnet, dass** es ferner Empfangsmittel des gesendeten Signals aufweist, die imstande sind, das Signalverarbeitungsverfahren nach einem der Ansprüche 1 bis 11 umzusetzen.

**13.** Aktives Sonar nach Anspruch 12, **dadurch gekennzeichnet, dass** die Sendemittel zwei Impulse zu unterschiedlichen Zeiten senden mit Frequenzbändern, die sich ganz oder teilweise überlagern.

**14.** Aktives Sonar nach Anspruch 12, **dadurch gekennzeichnet, dass** die Sendemittel die zwei Impulse gleichzeitig mit unterschiedlichen Frequenzbändern senden.

Fig. 1

Fig. 2